# EUROPEAN PATENT SPECIFICATION

(11) **EP 0 611 079 B1**
(45) Date of publication and mention of the grant of the patent: **21.05.1997**
(21) Application number: 94300703.9
(22) Date of filing: 31.01.1994
(51) Int. Cl.: B29C 65/20, B29C 65/00, H01M 2/04

(54) **Improved battery welding apparatus and method**
Batterieschweissvorrichtung und Batterieschweissmethode
Dispositif et procédé de soudage de batterie

(30) Priority: 03.02.1993 US 12873
(43) Date of publication of application: 17.08.1994
(73) Proprietor: HARDIGG INDUSTRIES, INC., South Deerfield Massachusetts 01373 (US)
(72) Inventor: Hardigg, James S., Conway, Massachusetts 01341 (US); Turner, Edward W., Deerfield, Massachusetts 01342 (US)
(74) Representative: Knowles, Audrey Elizabeth

(56) References cited:
- EP-A- 0 144 569
- EP-A- 0 313 731
- EP-A- 0 415 068
- PATENT ABSTRACTS OF JAPAN vol. 6, no. 107 (E-113)(985) & JP-A-57 036 772 (SHINKOUBE DENKI) 27 February 1982

## Description

The present invention relates to an improved apparatus and method for welding plastic battery jar covers onto plastic battery jars.

US Patent No.4352977 (& EP-A-0144569) discloses an apparatus and method for welding battery covers onto battery jars by heating the periphery of the cover and the jar by heating means positioned therebetween, removing the heating means, and bringing the cover and jar together to effect a joint therebetween. While the apparatus and method disclosed in US Patent No.4352977 performs satisfactorily, it has been found that when a thermoplastic hot-plate weld is accomplished using said apparatus and method, the melting process causes molten material to form a bead on each side of the interface between the cover and the jar.

Under present practices, the outer bead must be cut off or trimmed after the weld has been made and the plastic solidified so that the battery cell will fit into a steel container or tray with other battery cells. It is believed that the cutting or trimming process can open up small weld line imperfections which can result in microscopic leak paths which permit electrolytes (sulphuric acid) to escape the cell causing corrosion problems as well as contributing to the short-circuiting of the battery.

JP-A-57036772 discloses apparatus for welding a battery cover onto a battery jar to prevent formation of an outer bead by bringing opposed heated surfaces of the battery cover and battery jar together in an outer frame body. The frame body surrounds the interface between the battery cover and battery jar without pressing against the interface.

The invention as claimed is intended to remedy this drawback. It solves the problem of how to improve formation of a welded joint between plastic battery covers and plastic battery jars by the provision of means defined in the characterising part of Claim 1 for pressing against the interface between the jar and cover during the welding together of the jar and cover, i.e. during the welding process.

The main advantage offered by the invention is that the molten bead formed at the interface between the cover and the jar is pressed flat against the cover and the jar interface until the molten bead solidifies thus eliminating a cutting or trimming step and its resulting problems. In this regard, it has been found that the dimensions of a finished welded assembly formed using the apparatus and method of the present invention are only 0.04 to 0.07 cm (0.015 to 0.025 inches) greater than the original unwelded dimensions.

A more complete and detailed understanding of the present invention and its objectives may be obtained by reference to the following detailed description in combination with the drawings wherein:
FIGURE 1 is a front elevation view of a welding head assembly embodying the present invention;
FIGURE 2 is a side elevation view taken along the line 2-2 of Figure 1;
FIGURE 3 is a section view taken along the line 3-3 of Figure 2;
FIGURES 4A-4J are a series of diagrammatic figures showing the operational sequence of the present invention; and
FIGURE 5 is a diagrammatic view of the heating, clamping and bead pressing actions.

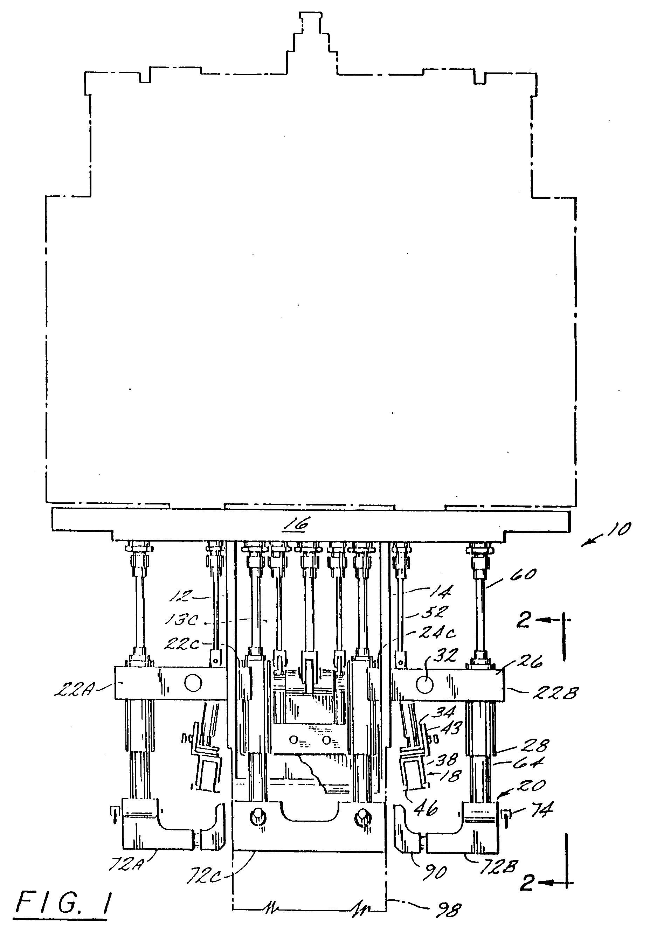

With reference to Figure 1, a welding head assembly in accordance with the invention is generally shown at 10 with associated parts of the overall welding apparatus shown in phantom.

As described in detail in US Patent No.4352977, the overall welding apparatus comprises a main frame, a work zone having loading, welding and unloading stations, means for moving containers to be welded successively from the loading station to the welding station and from the welding station to the unloading station, drive means for operating the apparatus and contact means for activating the drive means in a predetermined sequence.

The welding station includes the welding head assembly 10 for positioning and controlling the relationship between a battery cover 98 and a battery jar 100 during heating of opposed surfaces thereof and for bringing the heated surfaces together to form a welded joint therebetween as described in more detail later.

As diagrammatically illustrated in Figure 5, the improved welding head assembly 10 of the present invention has four heating, clamping and bead pressing assemblies which are designated as A, B, C and D respectively. As shown, the assemblies are positioned in opposing pairs, i.e. A and B, C and D.

Assemblies C and D are short and have a length comparable to the relatively constant width of battery jars which are in a narrow series of either 15.73 or 15.88 cm (6.19 or 6.25 inches) or a wider series of 21.91 cm (8.625 inches).

Since the length of a battery can vary anywhere from about 5.08 cm (2 inches) to about 30.48 or 35.56 cm (12 or 14 inches), assemblies A and B are longer and are positioned outside of assemblies C and D.

Accordingly, assemblies A and B should have lengths equal to or greater than the longest length that will be handled and it has been found that a length of 33.02 to 25.56 cm (13 to 14 inches) is sufficient for most purposes. Each of the assemblies A, B, C and D is, apart from the length differences, constructed substantially identically.

With reference to Figures 1 and 5, it will be seen that pairs of vertical mounting plates 12 and 14, and 13 and 15 are affixed to and extend downwardly from main horizontal mounting plate 16 which is a part of the apparatus disclosed in US Patent No.4352977. As shown in Figure 1, welding head assembly A is disposed on mounting plate 12, welding head assembly B is disposed on mounting plate 14, welding head assembly C is disposed on mounting plate 13 and welding head assembly D is disposed on mounting plate 15 (not shown in Figure 1). In that the mounting of each welding head assembly to a vertical mounting plate is the same, discussion will be limited to the mounting of welding head assembly B to mounting plate 14.

As depicted in Figures 1, 2 and 3, the welding head assembly B comprises a heating assembly 18 and a clamping and bead pressing assembly 20 which are disposed on and depend from a pair of brackets 22 and 24 mounted on the mounting plate 14. As shown, each bracket 22 and 24 has a horizontal portion 26 and a vertical portion 28.

The heating assembly 18 is comprised of an L-shaped crank 30 disposed on shaft 32 which is held between brackets 22 and 24. As shown, the crank 30 has a horizontal member 31 and a vertical member 33.

A pair of bored guides 35 and 37 are vertically disposed on either side of the member 33. Shafts 39 and 41 are slidably disposed in guides 35 and 37. A bracket 34 is affixed to the ends of shafts 39 and 41 and is movable therewith.

The bracket 34 supports a heater sub-assembly 38, which comprises a mounting bracket 43, an outer housing 40 affixed thereto, a heater block 42 containing a heater element 45 therein disposed in the outer housing 40 and held therein by bolts 44 and a heater blade 46 attached to the lower portion of the heater block 42 by screws 48. As shown, the heater sub-assembly 38 is releasably attached to bracket 34 by bolts 36.

The heating assembly 18 is disposed on the apparatus for substantially horizontal movement and for vertical movement. The horizontal movement is provided by the pivoting motion of the crank 30 on shaft 32 created by vertical movement of shaft 54 of a pneumatic or hydraulic cylinder (not shown) via clevis 56 and pin 58 which are attached to the outer end of arm 31.

Substantially vertical movement of the shaft 54 causes the crank 30 to pivot about shaft 32 thus moving the heater blade 46 into or out of a position where it may be brought into heating contact with a battery jar and battery cover.

Vertical movement of the heating assembly 18 is provided by a pair of pneumatic or hydraulic activated rods or cables 52 and 53 which are attached to the upper ends of shafts 39 and 41 by pins 55 and clevises 57. Up and down movement of rods 52 and 53, as described in US Patent No.4352977, moves the heater blade 46 into and out of contact with a battery cover and battery jar as will be described below.

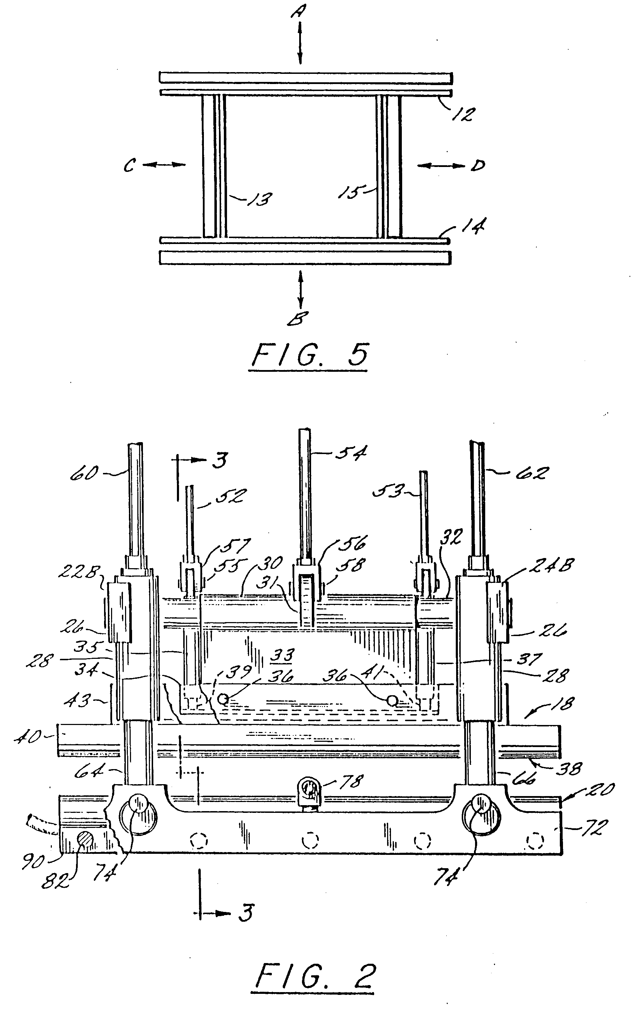

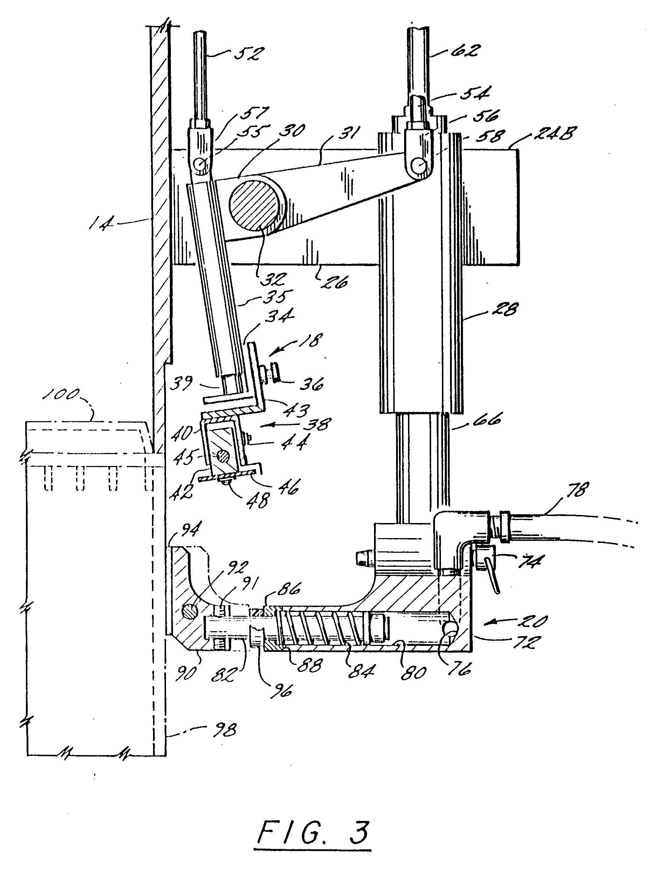

As seen in Figures 2 and 3, the clamping and bead pressing assembly 20 is located outwardly of and beneath the heating assembly 18 and is supported in this position by vertical portions 28 of brackets 22 and 24 respectively. The portions 28 are bored to slidably receive shafts 64 and 66 respectively which are attached to their upper ends (not shown) to the ends of rods 60 and 62 of pneumatic or hydraulic cylinders (not shown).

A manifold 72 is attached to the lower ends of shafts 64 and 66 by release pins 74. The manifold 72 is provided with internal passageways 76 for receiving air or hydraulic fluid from a feed port 78. The manifold 72 is also provided with a plurality of piston cavities 80 which slidably receive pistons 82 therein.

The pistons 82 are provided with biasing means such as spring 84 which urges the piston inwardly of said manifold 72. A collar 86, disposed on the inward face 88 of the manifold 72 prevents the pistons 82 from coming out of the piston cavities 80.

With particular reference to Figure 3, it will be seen that a presser foot 90 is affixed to the outer end of each piston 82 by screws 91. The presser foot 90 has a heater 92 disposed therein and may be provided with a specialised contact plate 94 presenting a non-stick surface for contact with the plastic battery container during welding.

The heater 92 is used to heat the foot 90 (or the plate 94) to aid in the forming of the welded joint and the contact surface (or the plate 94) may be Teflon (Registered Trade Mark) or the like.

Bumpers 96 are disposed on each of the pistons 82 for reducing the shock which may be caused by the inward movement of the pistons 82 in response to return by springs 84.

The individual presser feet 90 are arranged in the same horizontal plane in two opposing pairs 90A,90B and 90C,90D with each presser foot 90 in each pair 90A,90B and 90C,90D being positioned parallel to one another and with the pairs 90A,90B and 90C,90D being perpendicular to one another. such that the opposed pair 90C,90D lie within the area defined between the other opposed pair 90A,90B.

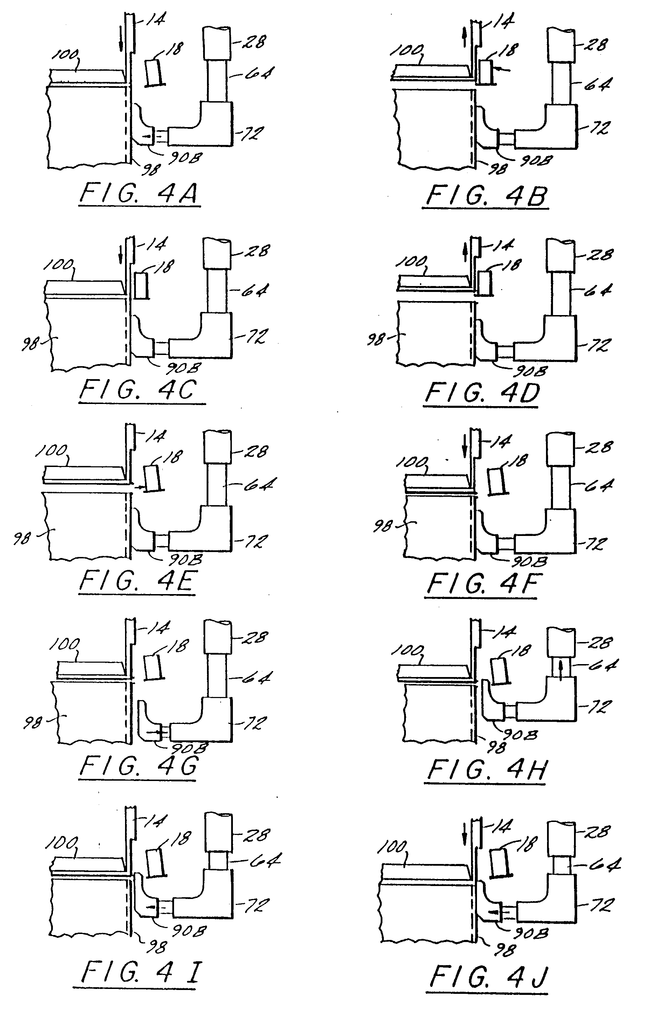

The method and sequence of operation of the heating, clamping and bead pressing assemblies will be explained with primary reference to Figures 4A-4J.

In general, battery jar 98 with battery elements (not shown) and terminal posts (not shown) in position in the jar 98 and cover 100 thereon is positioned under the welding head assembly 10 as described in US Patent No.4352977.

At this point in time, the welding head assembly 10 descends so as to engage the cover 100 for pick-up thereof following engagement of the sides of the battery jar 98 by the presser feet 90C and 90D and presser feet 90A and 90B. This condition, as it relates to assembly B, is schematically illustrated in Figure 4A.

As shown in Figure 4B, the cover 100 is raised with the welding head assembly 10 and the heating assembly 18 is pivoted into position so that the welding/heating blade 46 is disposed between the bottom of the cover 100 and the top of the jar 98 as a result of shaft 54, Figure 2, being urged downwardly by the action of a hydraulic or pneumatic cylinder (not shown).

Next in the sequence, the heating assembly is raised by the action of rods 52 and 53 being retracted so that the heating blade 46 comes into melting contact with the cover 100. As shown in Figure 4C, the welding head assembly is then moved downward to a point wherein the heating blade 46 also comes into melting contact with the top of the jar 98.

As depicted in Figure 4D, the welding head assembly with the cover 100 is moved upward and the heating blade assembly is moved downward thus taking the heating blade out of contact with the cover 100 and the jar 98. As indicated in Figure 4E, the heating assembly is then pivoted away from the jar and cover.

Next in the sequence of operation and as shown in Figure 4F, the welding head assembly is moved downwardly to a point where the cover 100 and the jar 98 are almost touching. At this point, the presser foot 90B releases from the clamping contact with the jar 98, as shown in Figure 4G, and the assembly 20 is raised to a point where the presser foot 90B is positioned opposite the interface between the cover 100 and the jar 98, as shown in Figure 4H.

As depicted in Figure 4I, the presser foot 90B is then moved inwardly to contact the jar 98 and the cover 100 and thereby flattens the bead created by the heater blade 46 at the interface of the cover 100 and the jar 98. In Figure 4J, it will be seen that the cover 100 is then slowly lowered and clamped into full contact with the jar 98 causing the two to be welded together.

The heater 92 is used to heat the presser foot 90B to aid in the forming of the welded joint and the molten plastics material at the interface of the cover 100 and jar 98 is prevented from sticking to the presser foot 90B by the non-stick surface provided by the contact plate 94.

As stated above, battery cells made by the apparatus and method of the present invention are less likely to develop leaks at the jar/cover welded interface than are battery cells made by apparatus and methods of prior art. In support of this, thousands of battery cells made by the apparatus and method disclosed in US Patent No.4352977 were tested for leaks over an eight-day period and exhibited an average leak rate of 0.52%. During the same period of time, battery cells produced by the apparatus and method of the present invention were also tested for leaks and exhibited an average leak rate of 0.31%. In other words, the leak rate was cut almost in half.

While this invention has been described in connection with that which is presently conceived to be the preferred embodiment, it is to be understood that the present invention is not limited to the welding apparatus disclosed in US Patent No.4352977, but rather is intended to cover generally the provision, in battery welding apparatus, of pressing means for flattening the molten bead formed at the interface between the cover and jar during welding, and various other modifications and equivalent arrangements within the scope of the appended claims will be apparent to those skilled in the art.

For example, the number and arrangement of the pressure feet may be varied as desired. Alternatively, any other suitable means may be provided for applying pressure to the interface between the cover and jar to flatten the molten bead created at the interface during the welding process.

In this exemplary embodiment relative movement between the cover and jar during the welding process is provided by pick-up means of the weld head assembly for raising and lowering the cover with the jar stationary. It will be understood however that such relative movement could be provided either by raising and lowering the jar with the cover stationary or by moving both the cover and jar.

In addition, guide means is preferably provided for maintaining alignment between the relatively movable cover and jar during the welding process. For example, the cover may be provided with an integral guide structure such as spaced apart guide posts received in and engageable with the sidewall of the jar to maintain the alignment between the opposed surfaces of the cover and jar during relative movement thereof. It will be understood however that such alignment may be provided by any other suitable means whether part of the cover and/or jar or not.

## Claims

1. A welding apparatus for welding plastic battery covers (100) to plastic battery jars (98) to form a closed container, the apparatus comprising a frame, a work zone having loading, welding and unloading stations, means for moving the battery covers (100) and battery jars (98) to be welded together from the loading station to the welding station, means for moving welded battery covers (100) and battery jars (98) from the welding station to the unloading station, welding means (18) for heating portions of the battery covers (100) and battery jars (98), clamping means (20) for positioning and controlling the relationship between the battery covers (100) and battery jars (98) during welding, drive means for operating the apparatus and control means for activating the drive means in a predetermined sequence **characterised in that** means (20) is provided for pressing against the interface between the battery cover (100) and battery jar (98) during welding thereof, the pressing means (20) including a plurality of presser feet (90) individually disposed on the apparatus along each side of the container formed by the battery cover (100) and battery jar (98), means (60,62) for moving each presser foot (90) in a vertical direction including a pair of brackets (22,24) disposed on the apparatus, the brackets (22,24) having a horizontal portion (26) and a vertical portion (28), the vertical portion (28) having a vertical bore therethrough, a shaft (64,66) slidably disposed in the bore, a manifold (72) attached to the lower end of the shaft (64,66) and movable therewith, pneumatic means (60,62) attached to the upper end of the shaft (64,66) for moving same in a vertical direction, the presser foot (90) being operatively associated with the manifold (72) and movable vertically therewith, and means (82) for moving each presser foot (90) in a horizontal direction.

2. Apparatus according to Claim 1 characterised in that the means (82) for moving each presser foot (90) in a horizontal direction includes at least one cavity (80) horizontally disposed in the manifold (72), a piston (82) slidably disposed in the cavity (80), the piston (82) having one end thereof affixed to the presser foot (90), means (86) for retaining the piston (82) in the cavity (80), biasing means (84) for urging the piston (82) into the cavity (80), a feed port (78) for feeding an operating fluid to the manifold (72) and an internal passageway (76) for passing the operating fluid from the feed port (78) through the manifold (72) to the cavity (80).

3. Apparatus according to Claim 1 or Claim 2 characterised in that each presser foot (90) includes heating means (92).

4. Apparatus according to any one of the preceding Claims characterised in that the individual presser feet (90) are arranged in the same horizontal plane in two opposing pairs (90A,90B;90C,90D) with each presser foot (90) in each pair (90A,90B;90C,90D) being positioned parallel to one another with the pairs (90A,90B;90C,90D) being perpendicular to one another.

5. Apparatus according to Claim 4 characterised in that one (90C,90D) of the two opposing pairs lies within the area defined between the other one (90A,90B) of the two opposing pairs.

6. Apparatus according to any one of the preceding Claims characterised in that each presser foot (90) includes non-stick contact means (94).

7. Apparatus according to Claim 6 characterised in that the non-stick contact means (94) comprises a detachable contact plate (94) of low friction material.

8. Apparatus according to Claim 2 characterised in that the moving means (82) for each presser foot (90) includes bumper means (96) for reducing shock caused by inward movement of the piston (82) urged by the biasing means (84) into the cavity (80).

## Patentansprüche

1. Schweißvorrichtung zum Schweißen von aus Kunststoff bestehenden Batteriedeckeln (100) auf aus Kunststoff bestehende Batteriegehäuse (98) zur Herstellung eines geschlossenen Behälters, wobei die Vorrichtung ein Rahmen, eine Arbeitszone mit Lade, Schweiß- und Entladestationen, Einrichtungen zum Bewegen der Batteriedeckel (100) und der mit diesen zu verschweißenden Batteriegehäusen (98) zusammen von der Ladestation zu der Schweißstation, Einrichtungen zum Bewegen der geschweißten Batteriedeckel (100) und Batteriegehäuse (98) von der Schweißstation zu der Entladestation, Schweißeinrichtungen (18) zum Erhitzen von Teilen der Batteriedeckel (100)und der Batteriegehäuse (98), Klemmeinrichtungen (20) zum Positionieren und Steuern der Beziehung zwischen den Batteriedeckeln (100) und den Batteriegehäusen (98) während des Schweißens,Antriebseinrichtungen, um die Vorrichtung zu Betreiben, sowie Steuereinrichtungen zum Aktivieren der Antriebseinrichtungen in einer vorbestimmten Reihenfolge aufweist, dadurch gekennzeichnet, daß eine Einrichtung (20) vorgesehen ist, um gegen die Grenzfläche zwischen dem Batteriedeckel (100)und dem Batteriegehäuse (98) während des Schweißens zu pressen, wobei die Presseinrichtung (20) eine Vielzahl von Pressfüssen (90) aufweist, die einzeln an der Vorrichtung längs jeder Seite des durch den Batteriedeckel (100) und das Batteriegehäuse (98) gebildeten Behälters angeordnet sind, daß Einrichtungen (60, 62) vorgesehen sind, um jeden Pressfuß (90) in vertikaler Richtung zu bewegen, einschließlich eines Paars von Trägern (22, 24) die auf der Vorrichtung angeordnet sind, wobei die Träger (22, 24) einen horizontalen Abschnitt (26) und einen vertikalen Abschnitt (28) aufweisen, wobei der vertikale Abschnitt (28) eine durchgehende vertikale Bohrung aufweist und eine Welle (64, 66) in der Bohrung gleitbar angeordnet ist, daß ein Verteiler (72) an dem Unterende der Welle (64, 66) und mit dieser beweglich angeordnet ist, daß pneumatische Einrichtungen (60, 62) an dem Oberende der Welle (64, 66) vorgesehen sind um diese in vertikaler Richtung zu bewegen, wobei der Pressfuß (90) betriebsmässig mit dem Verteiler (72) verbunden und mit diesem vertikal bewegbar ist und daß Einrichtungen (82) vorgesehen sind, um jeden Pressfuß (90) in horizontaler Richtung zu bewegen.

2. Vorrichtung nach Anspruch 1, dadurch gekennzeichnet, daß die Einrichtung (82) zum Bewegen jedes Pressfusses(90) in horizontaler Richtung mindestens einen Raum (80) aufweist, der horizontal in dem Verteiler (72) angeordnet ist, wobei ein Kolben (82) in dem Raum (80) angeordnet ist, daß ein Ende des Kolbens (82) an dem Pressfuß (90) befestigt ist, daß Einrichtungen (86) vorgesehen sind, um den Kolben (82) in dem Raum (80) zu halten, daß Federmittel (84) vorgesehen sind, um den Kolben (82) in den Raum (80) zu drücken, daß eine Speiseöffnung (78) vorgesehen ist, um ein Betriebsmedium in den Verteiler einzuspeisen, und daß ein innerer Durchlaß (76) vorgesehen ist, um das Betriebsmedium von der Speiseöffnung (78) durch den Verteiler (72) in den Raum (80) zu leiten.

3. Vorrichtung nach Anspruch 1 oder 2, dadurch gekennzeichnet, daß jeder Pressfuß (90) Heizeinrichtungen (92) enthält.

4. Vorrichtung nach einem der vorstehenden Ansprüche, dadurch gekennzeichnet, daß die einzelnen Pressfüsse (90) in der gleichen horizontalen Ebene in zwei einander gegenüberliegenden Paaren (90A, 90B, 90C, 90D) angeordnet sind, wobei jeder Pressfuß (90) in jedem Paar (90A, 90B, 90C, 90D) parallel zu dem anderen des Paares angeordnet ist, und wobei die Paare (90A, 90B, 90C, 90D) senkrecht zueinander stehen.

5. Vorrichtung nach Anspruch 4, dadurch gekennzeichnet, daß eines (90C, 90D) der einander gegenüberliegenden Paare innerhalb des Bereiches liegt, welcher zwischen dem anderen (90A, 90B) der beiden einander gegenüberliegenden Paare definiert ist.

6. Vorrichtung nach einem der vorstehenden Ansprüche, dadurch gekennzeichnet, daß jeder Pressfuß (90) nicht klebende Kontakteinrichtungen (94) enthält.

7. Vorrichtung nach Anspruch 6, dadurch gekennzeichnet, daß die nicht klebenden Kontakteinrichtungen (94) eine abnehmbare Kontaktplatte (94) aus Material geringer Reibung aufweist.

8. Vorrichtung nach Anspruch 2, dadurch gekennzeichnet, daß die Bewegungseinrichtungen (82) für jeden Pressfuß (90) Stoßdämpfereinrichtungen (96) aufweisen, um den durch die nach innen in den Raum (80) gerichtete Bewegung des Kolbens (82) aufgrund des Drucks der Federmittel (94) in den Raum (80) erzeugten Schlag zu verringern.

## Revendications

1. Appareil de soudage pour souder des couvercles de batteries plastiques (100) à des bacs de batteries (98) pour former un réceptacle fermé, l'appareil comprenant un châssis, une zone de travail ayant des postes de chargement, de soudage et de déchargement, des moyens pour déplacer les couvercles de batteries (100) et les bacs de batteries (98) à souder ensemble du poste de chargement au poste de soudage, des moyens pour déplacer les couvercles de batteries (100) et les bacs de batteries (98) soudés du poste de soudage au poste de déchargement, des moyens de soudage (18) pour chauffer des parties des couvercles de batteries (100) et des bacs de batteries (98), des moyens d'immobilisation (20) pour positionner les couvercles de batteries (100) et les bacs de batteries (98) et régler leur relation mutuelle au cours du soudage, des moyens d'entraînement pour faire fonctionner l'appareil et des moyens de commande pour activer les moyens d'entraînement selon une séquence prédéterminée, caractérisé en ce que des moyens (20) sont prévus pour presser contre l'interface entre le couvercle de batterie (100) et le bac de batterie (98) au cours de leur soudage, les moyens de pression (20) comprenant une série de pieds presseurs (90) individuellement disposés sur l'appareil le long de chaque côté du réceptacle formé par le couvercle de batterie (100) et le bac de batterie (98), des moyens (60, 62) pour déplacer chaque pied presseur (90) dans une direction verticale, comprenant deux supports (22, 24) disposés sur l'appareil, lesdits supports (22, 24) ayant une partie horizontale (26) et une partie verticale (28), la partie verticale (28) étant traversée par un orifice vertical, un arbre (64, 66) disposé à glissement dans l'orifice, un collecteur (72) fixé à l'extrémité inférieure de l'arbre (64, 66) et mobile avec lui, des moyens pneumatiques (60, 62) fixés à l'extrémité supérieure de l'arbre (64, 66) pour déplacer celui-ci dans une direction verticale, le pied presseur (90) étant associé opérationnellement avec le collecteur (72) et déplaçable verticalement avec celui-ci, et des moyens (82) pour déplacer chaque pied presseur (90) dans une direction horizontale.

2. Appareil selon la revendication 1, caractérisé en ce que les moyens (82) pour déplacer chaque pied presseur (90) dans une direction horizontale comprennent au moins une cavité (80) disposée horizontalement dans le collecteur (72), un piston (82) monté à glissement dans la cavité (80), le piston (82) ayant une de ses extrémités fixée au pied presseur (90), des moyens (86) pour retenir le piston (82) dans la cavité (80), des moyens de sollicitation (84) pour presser le piston (82) dans la cavité (80), un orifice d'alimentation (78) pour acheminer un fluide opératoire au collecteur (72) et un passage intérieur (76) pour faire passer le fluide opératoire de l'orifice d'alimentation (78) à la cavité (80) par l'entremise du collecteur (72).

3. Appareil selon la revendication 1 ou 2, caractérisé en ce que chaque pied presseur (90) comprend des moyens de chauffage (92).

4. Appareil selon l'une quelconque des revendications précédentes, caractérisé en ce que les pieds presseurs individuels (90) sont agencés dans le même plan horizontal par deux paires opposées (90A, 90B; 90C, 90D), chaque pied presseur (90) de chaque paire (90A, 90B; 90C, 90D) étant disposé parallèlement à l'autre et les paires (90A, 90B; 90C, 90D) étant perpendiculaires l'une à l'autre.

5. Appareil selon la revendication 4, caractérisé en ce qu'une (90C, 90D) des deux paires opposées se situe dans la zone comprise entre l'autre (90A, 90B) des deux paires opposées.

6. Appareil selon l'une quelconque des revendications précédentes, caractérisé en ce que chaque pied presseur (90) comprend des moyens de contact non collants (94).

7. Appareil selon la revendication 6, caractérisé en ce que les moyens de contact non collants (94) comprennent une plaque de contact détachable d'un matériau de faible coefficient de friction.

8. Appareil selon la revendication 2, caractérisé en ce que les moyens de déplacement (82) pour chaque pied presseur (90) comprennent des moyens d'amortissement (96) pour réduire le choc provoqué par le mouvement vers l'intérieur du piston (82) pressé par les moyens de sollicitation (84) dans la cavité (80).
